Europäisches Patentamt

European Patent Office

Office européen des brevets

(11) Veröffentlichungsnummer: **0 026 919**
**A2**

(12) **EUROPÄISCHE PATENTANMELDUNG**

(21) Anmeldenummer: **80105952.8**

(22) Anmeldetag: **02.10.80**

(51) Int. Cl.³: **B 25 H 1/10**

(30) Priorität: **03.10.79 DE 7928117 U**
**14.03.80 DE 3009780**

(43) Veröffentlichungstag der Anmeldung: **15.04.81**
**Patentblatt 81/15**

(84) Benannte Vertragsstaaten: **AT BE CH FR GB IT LI NL SE**

(71) Anmelder: **Tietjen, Volker, Gellerstrasse 45,**
**D-2120 Lüneburg (DE)**

(72) Erfinder: **Tietjen, Volker, Gellerstrasse 45,**
**D-2120 Lüneburg (DE)**

(74) Vertreter: **Glawe, Richard, Dr. Dipl.-Ing. et al, Glawe,**
**Delfs, Moll & Partner Rothenbaumchaussee 58,**
**D-2000 Hamburg 13 (DE)**

(54) **Arbeitstisch mit Maschinenschlitten.**

(57) Der Arbeitstisch mit einem Maschinenschlitten (7) zur Halterung von Holzbearbeitungsstücken mit einem Anschlag für das zu bearbeitende Werkstück hat einen skelettartigen Tischrahmen (1), der eine Ausnehmung (5) mit einer Schlittenführung (6) für den Werkzeugschlitten (7) aufweist, die sich im werkstückauflageseitigen Rahmenabschnitt (2) des Tischrahmens (1) zwischen den Seitenflächen (3, 4) desselben erstreckt. Der Werkzeugschlitten (7) ist mittels einer Klemmeinrichtung (8, 55, 70, 90) feststellbar. Ausserdem ist in diesem Rahmenabschnitt (2) ein Massjustier- und Anzeigegerät (9) und ein verstellbarer Werkstückanschlag (11) vorgesehen.

Die Erfindung betrifft einen Arbeitstisch mit Maschinenschlitten zur Halterung von Holzbearbeitungswerkzeugen
mit einem Anschlag für das zu bearbeitende Werkstück.

Die Aufgabe der Erfindung besteht darin, einen gattungsgemäßen Arbeitstisch zu schaffen, bei dem bei allen Arbeitsstellungen des Werkzeuges stets die gesamte Tischbreite als Auflagefläche für das Werkstück zur Verfügung
steht.

Erfindungsgemäß erfolgt die Lösung der Aufgabe durch einen
skelettartigen Tischrahmen, in dessen werkstückauflageseitigem Rahmenabschnitt eine sich zwischen den Seitenflächen
des Tischrahmens erstreckende Ausnehmung mit einer Schlittenführung für einen Werkzeugschlitten, der mittels einer
Klemmeinrichtung feststellbar ist, einem Maßjustier- und
Anzeigegerät      und einem verstellbaren Werkstückanschlag ausgebildet ist.

Dieser erfindungsgemäße Arbeitstisch kann stationär in
Holzbearbeitungsbetrieben oder aber auch mobil auf Baustellen u. dgl. für Montagearbeiten eingesetzt werden
und ermöglicht ein einfaches Bearbeiten und Profilieren
von Holz- bzw. Plattenkanten sowie die Ausbildung von
Profilierungen in Holz- und Plattenflächen.

Weitere Ausgestaltungen der Erfindung werden in den Unteransprüchen beschrieben und im folgenden anhand des in den

· 2 ·        0026919

Zeichnungen beispielsweise dargestellten Arbeitstisches näher erläutert. Es zeigt

Fig. 1   den Arbeitstisch in einer schaubildlichen
         Ansicht in einer Explosionsdarstellung,

Fig. 2   den Arbeitstisch in einer Seitenansicht,

Fig. 3   den Arbeitstisch in einer Vorderansicht,

Fig. 4   den Arbeitstisch in einer Draufsicht,

Fig. 5   einen Ausschnitt des Arbeitstisches mit
         einer Klemmeinrichtung in einer weiteren
         Seitenansicht,

Fig. 6   den Arbeitstisch in einer Vorderansicht
         im Schnitt A-B,

Fig. 7   den Arbeitstisch nach Fig. 5 in der Draufsicht,

Fig. 8   einen Ausschnitt aus dem Arbeitstisch nach

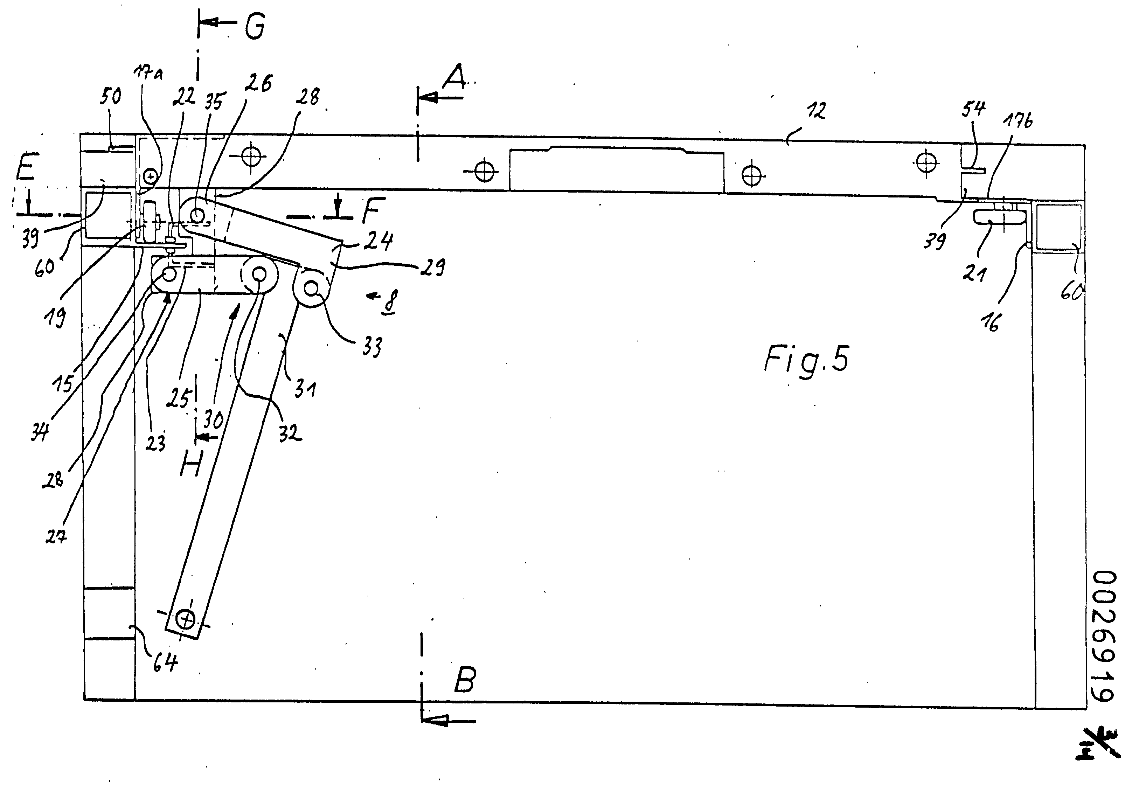

         Fig. 5 in einer vergrößerten Darstellung im
         Schnitt C-D,

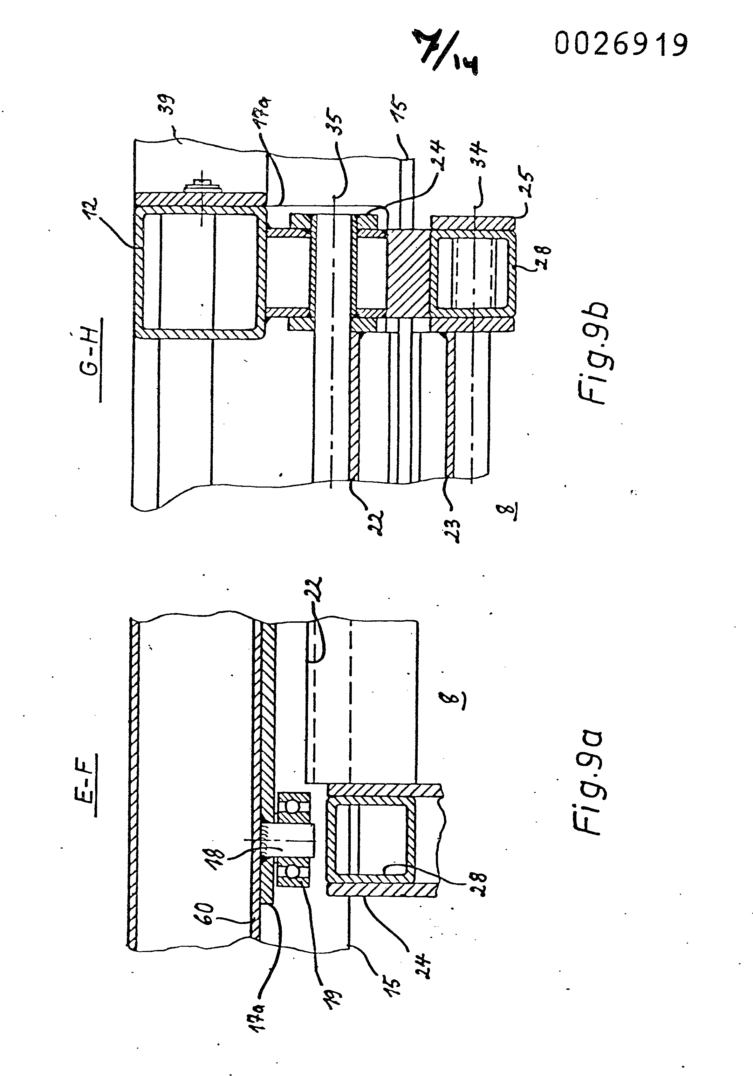

Fig.9a   weitere Einzelheiten der Klemmeinrichtung
bis 9b   in einem Horizontalschnitt E-F und einem
         Vertikalschnitt G-H,

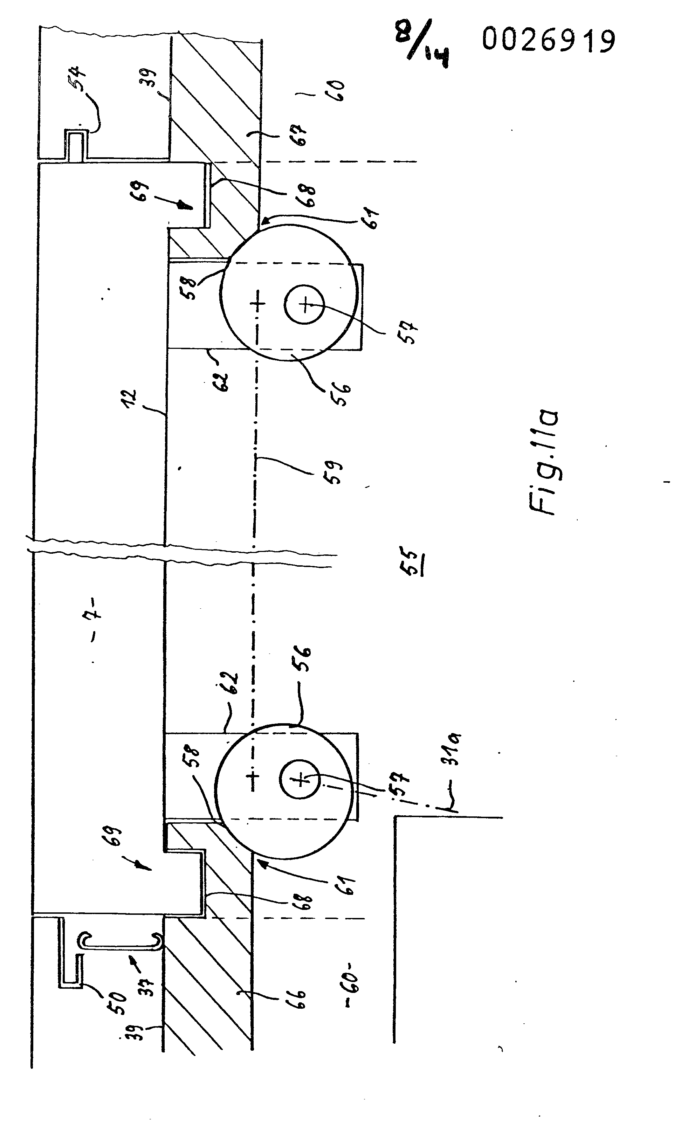

Fig.10   eine Ansicht M-N auf den Arbeitstisch,

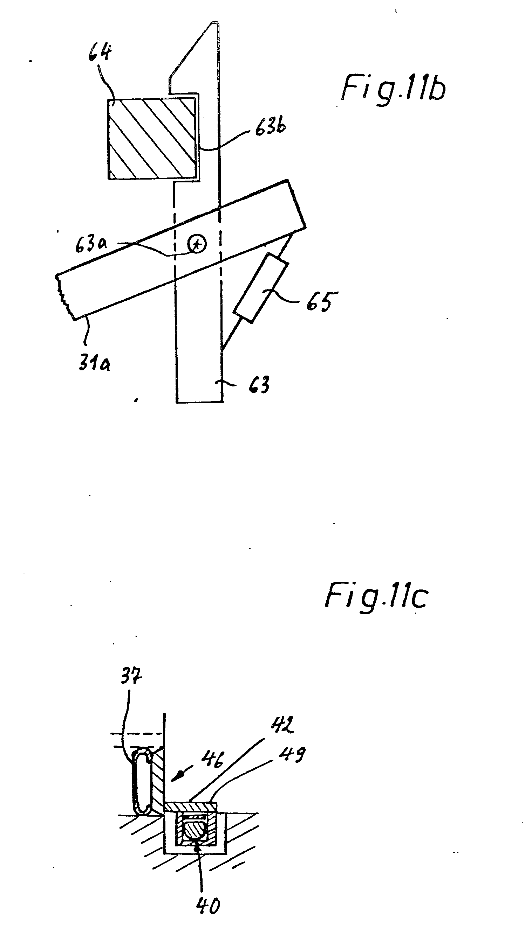

Fig.11   weitere Ausbildungen einer Klemmeinrichtung
bis 13   in schematischen Seitenansichten,

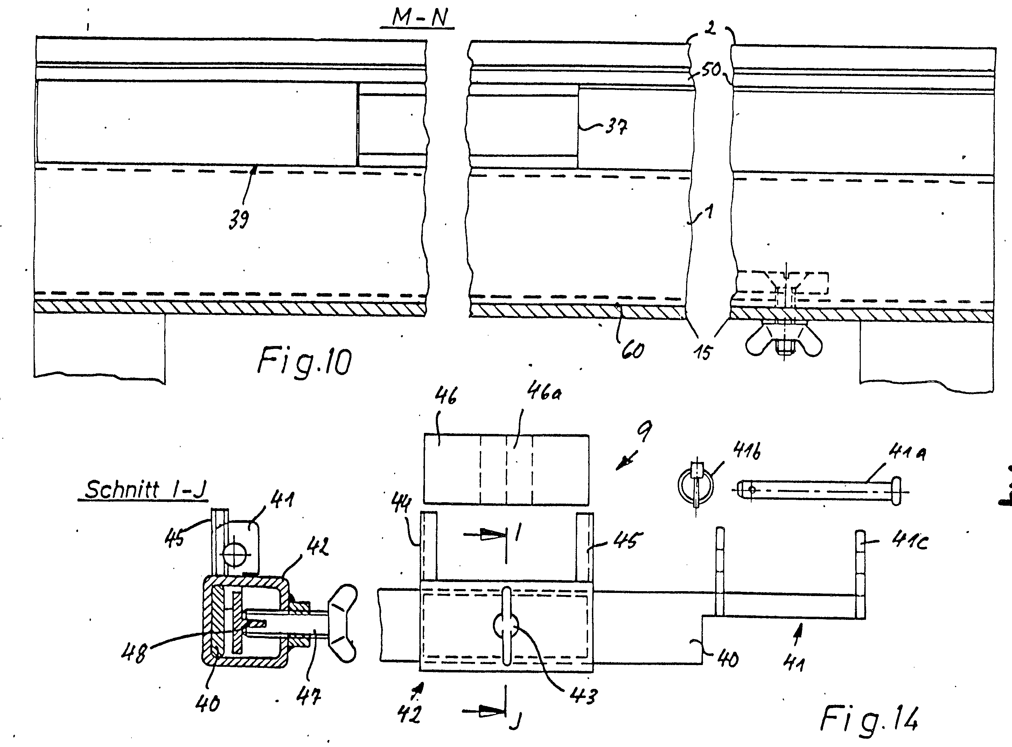

Fig.14   das Maßjustier- und Einstellgerät des Arbeitstisches in einer Vorderansicht sowie
         einem Schnitt I-J,

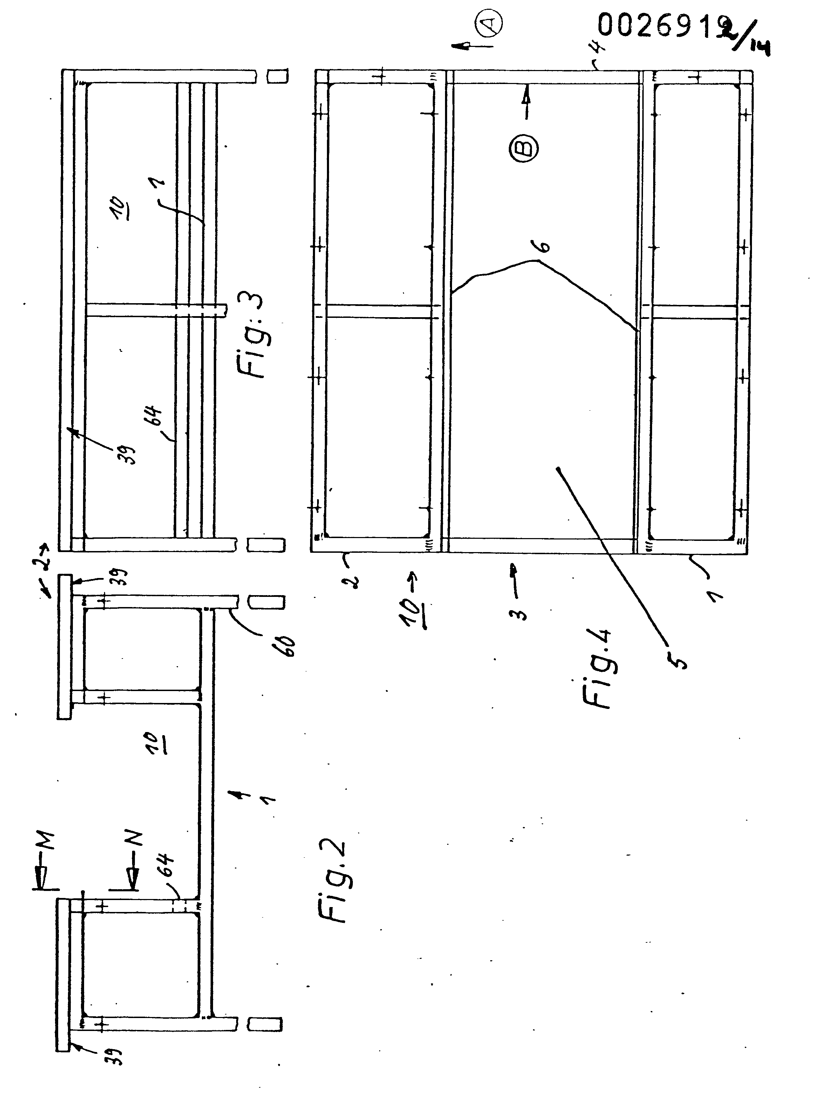

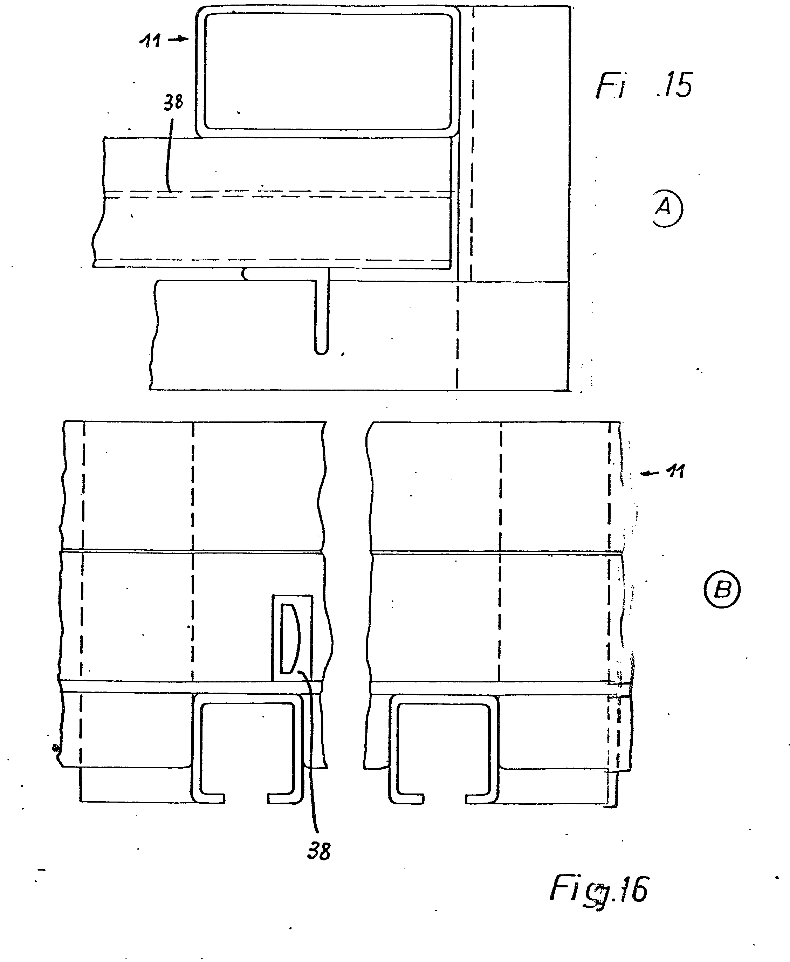

Fig.15   eine Ansicht A nach Fig. 4,

Fig. 16   eine Ansicht B nach Fig. 4,

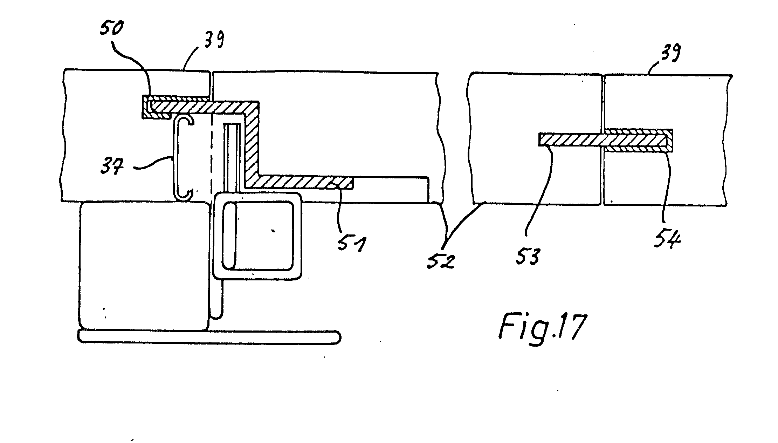

Fig. 17   die Halterung des Tischeinsatzes in
          einer Seitenansicht des Tischrahmens
          im Schnitt.

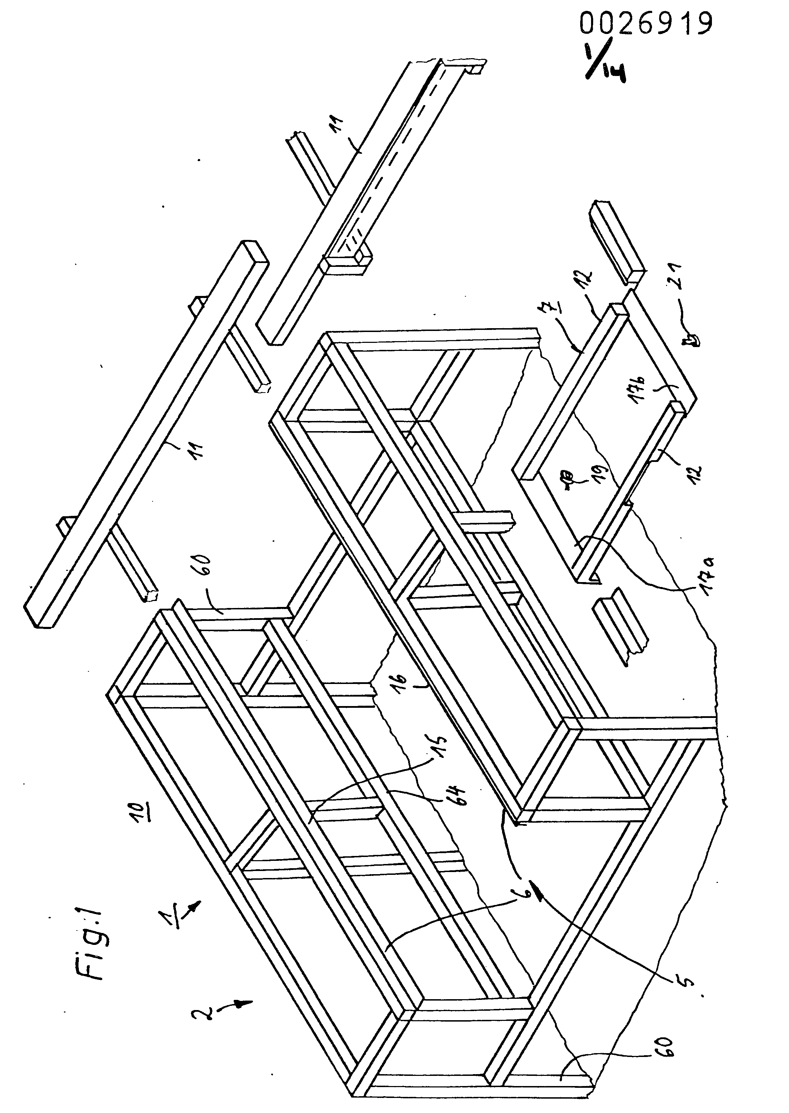

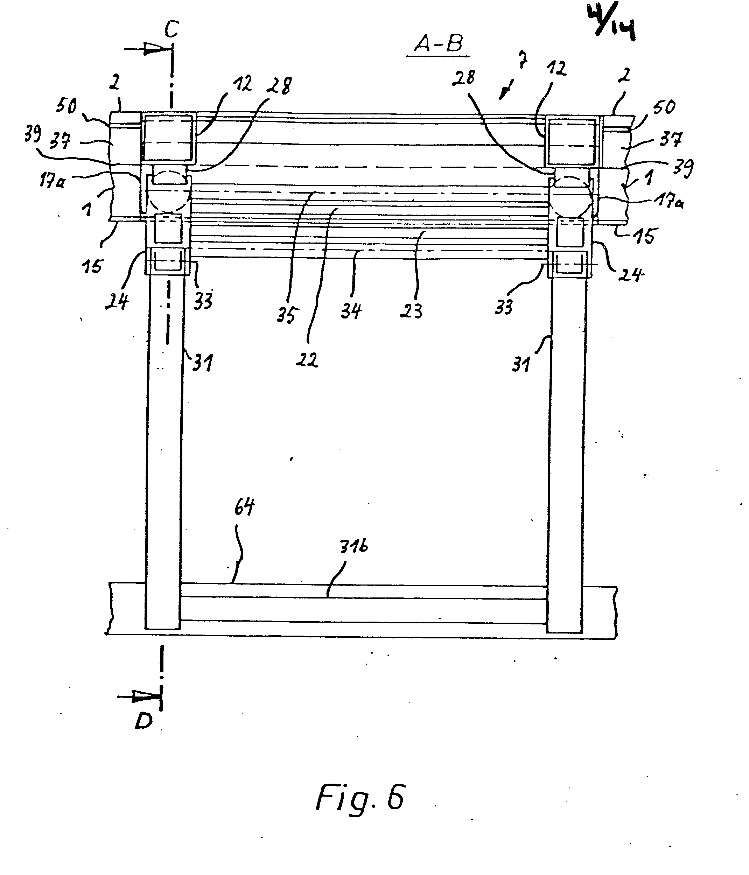

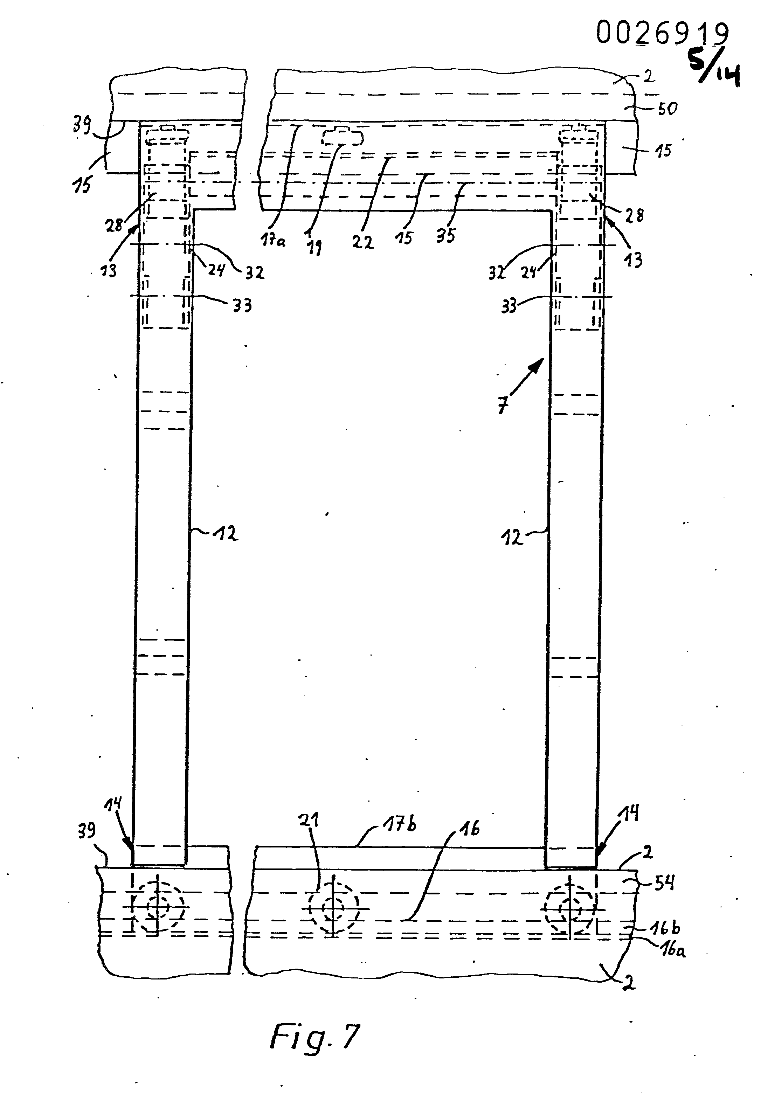

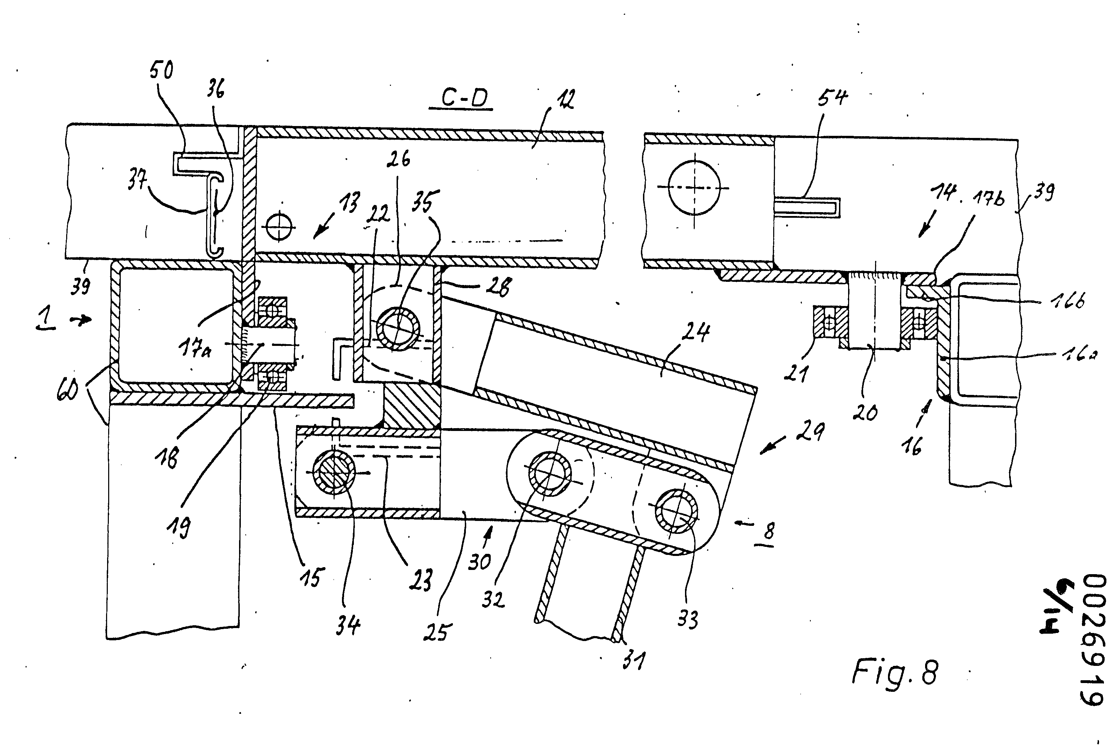

In den Fig. 1 bis 4 ist der Arbeitstisch 10 schematisch
dargestellt.. Er besteht aus einem skelettartigen Tischrahmen 1, der aus Rahmenprofilen 60 gebildet ist. Im
Bereich des werkstückauflageseitigen Rahmenabschnittes
2 ist eine sich über die Tischrahmenquerachse erstreckende, zwischen den Seitenflächen 3, 4 des Tischrahmens 1 angeordnete Ausnehmung 5 ausgebildet. An der oberen vorderen und hinteren Begrenzung der Ausnehmung 5 ist die
Schlittenführung 6 für einen Werkzeugschlitten 7 ausgebildet. Wie in den Fig. 5 bis 8 dargestellt, ist der
Werkzeugschlitten 7, auf dem beispielsweise eine Handkreissäge befestigt werden kann, aus Traversen 12 gebildet, deren einer Endabschnitt 13 auf einer an dem Tischrahmen 1 angeordneten stegartigen Laufschiene 15 gelagert ist. Hierzu ist an dem Endabschnitt 13 der Traversen 12 ein vertikaler Steg 17a ausgebildet, an dem
horizontale Zapfen 18 angeordnet sind. Die Zapfen 18
dienen zur Halterung von Rollenlagern 19, mittels
derer der Werkzeugschlitten 7 auf der Laufschiene 15
abrollbar ist. An dem anderen Endabschnitt 14 der Traversen 12 ist ein horizontaler Steg 17b mit vertikalen
Zapfen 20 ausgebildet, auf denen Rollenlager 21 befestigt sind. Diese Rollenlager 21 sind an dem vertikalen langen Schenkel 16a der als L-förmiges Winkelprofil ausgebildeten Laufschiene 16 abgestützt. Diese Rollenlager 21 dienen vornehmlich zur Führung des Werkzeugschlittens 7 in Richtung der Querachse der Ausnehmung 5. Der Randsteg 14a des Endabschnittes 14 ist auf dem kurzen Schenkel 16b der Laufschiene 16 abgestützt.

Um den Werkzeugschlitten 7 nach einer bestimmten Einstellung innerhalb des Tischrahmens 1 arretieren zu können, ist eine Klemmeinrichtung 8 vorgesehen (Fig. 5, 8, 9a, 9b). Die Klemmeinrichtung 8 weist zwei Klemmstücke 22, 23 auf, von denen das eine Klemmstück 22 an zwei oberen Klemmgelenken 24 befestigt ist. Das andere Klemmstück 23 ist an zwei unteren Klemmgelenken 25 befestigt. Die Endabschnitte 26, 27 der Klemmgelenke 24,25 sind mittels Drehzapfen 34, 35 an zwei Klemmhalterungen 28 drehbar gelagert, die an den Traversen 12 befestigt sind. Die anderen Endabschnitte 29, 30 der Klemmgelenke 24, 25 sind mittels Drehachsen 32, 33 mit zwei hebelartigen Feststellgelenken 31 verbunden. Die zwei Bedienungshebel 31a sind an ihrem freien unteren Endabschnitt vorzugsweise mittels einer Querstange 31b verbunden. Die Querstange 31b dient gleichzeitig als Handhabe zur Betätigung der Klemmeinrichtung 8. Durch Schwenken der Bedienungshebel 31a werden die Klemmstücke 22, 23 auf der Laufschiene 15 zur Anlage gebracht und bewirken so durch Reibschluß eine Feststellung des Werkzeugschlittens 7 in einer vorbestimmten eingestellten Stellung.

In den Fig. 11a bis 11c ist als weitere Ausbildung die
Klemmeinrichtung 55 dargestellt. Der Werkzeugschlitten
7 ist mittels Stegen 69 in Führungsnuten 68 geführt,
die in Führungsplatten 66, 67 ausgebildet sind. Die
Führungsplatten 66, 67 befinden sich beidseitig der
Ausnehmung 5 im Bereich des werkstückauflageseitigen
Rahmenabschnitts 2 des Tischrahmens 1. An den der Ausnehmung 5 zugewandten Abschnitten der Führungsplatten
66, 67 sind Fasen 58 ausgebildet, die als Anschläge 61
für als Klemmittel vorgesehene Exzenterstücke 56 dienen.
An der Unterseite des Werkzeugschlittens 7 sind randseitig den Führungsplatten 66, 67 zugewandt Exzenterhalter 62 angeordnet, in denen Exzenterwellen 57 mit Exzenterstücken 56 gelagert sind. Jeder Führungsplatte 66, 67
ist eine Exzenterwelle 57 zugeordnet.

Die eine Exzenterwelle 57 ist mit Bedienungshebeln 31a
zur Betätigung der Exzenterwelle 57 verbunden. Zwischen
den Exzenterstücken 56 der einen Exzenterwelle 57 und
den Exzenterstücken 56 der anderen Exzenterwelle 57
sind Übertragungsstangen 59 angeordnet, so daß
bei Betätigung der Bedienungshebel 31a eine synchrone
Verschwenkung der Exzenterstücke 56 erfolgt. Bei Anlage
der Exzenterstücke 56 an den als Anschlag 61 dienenden
Fasen 58 wird der Werkzeugschlitten 7 festgeklemmt und
arretiert. Um ein vorzeitiges Lösen der Klemmverbindung
zu verhindern, ist an mindestens einem Bedienungshebel 31a ein Klemmhebel 63 mit einer Ausnehmung 63b schwenkbar angeordnet, der an einer am Tischrahmen 1 angebrachten Schiene 64 einrasten kann. Eine Zugfeder 65 zwischen dem Bedienungshebel 31a und dem Klemmhebel 63 bewirkt ein auf den Klemmhebel 63 wirkendes Drehmoment um die Drehachse 63a, wodurch der Klemmhebel 63 an der Schiene 64 im Bereich der Ausnehmung 63b festklemmt (Fig. 11b). Die Klemmeinrichtung 55 ist besonders für schwere Ausführungen des Arbeitstisches 10 geeignet, da die Führungsplatten 66, 67 aus hochfestem Werkstoff und im Bereich der Führungsnuten 68 gehärtet sein müssen. Die Exzenterstücke 56 können sich über die gesamte Breite des Werkzeugschlittens 7 erstrecken. Zur Entriegelung des Bedienungshebels 31a wird der Klemmhebel 63 durch Betätigung von dessen freiem Endabschnitt gelöst. Mit der anschließenden Bewegung des Bedienungshebels 31a nach vorne werden die mittels Übertragungsstangen 59 verbundenen Exzenterstücke 56 aus ihrer Verriegelung an den Fasen 58 gelöst. Zur leichteren Verschiebbarkeit des Werkzeugschlittens 7 nach der Entriegelung kann der Werkzeugschlitten 7 mittels Rollenlagern od. dgl. in den Führungsnuten 68 gelagert sein. Es ist auch möglich, in einem der Stege 69 eine z.B. als einseitig abgeflachtes Rundeisen ausgebildete Maßeinstelleiste 40 zu befestigen, auf der eine sockelartig ausgebildete Markierungsbuchse 42 feststellbar ist (Fig. 11c).

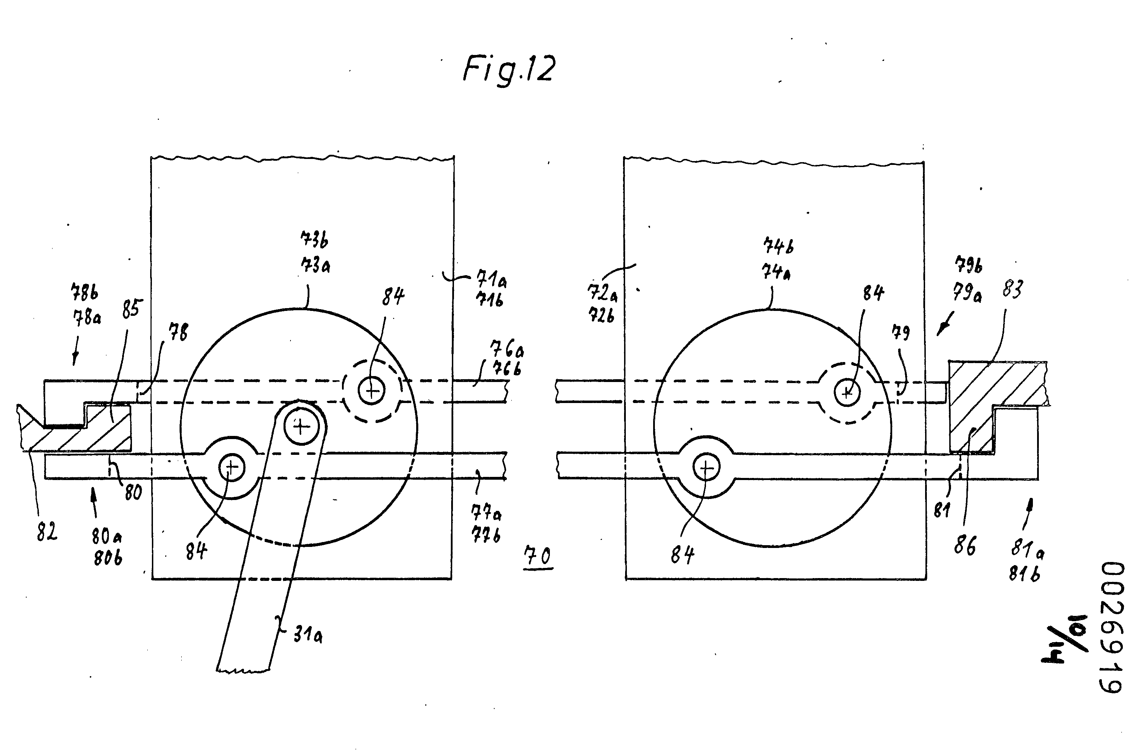

In Fig. 12 ist eine weitere zur Verriegelung des Werkzeugschlittens 7 dienende Klemmeinrichtung 70 dargestellt.
An der Unterseite des Werkzeugschlittens 7 sind vier Halter 71a, 71b, 72a, 72b angeordnet, in denen jeweils eine
Gelenkscheibe 73a, 73b, 74a, 74b drehbar gelagert ist.
An den Gelenkscheiben 73a, 73b, 74a, 74b sind vier Spannriegel 76a, 76b, 77a, 77b parallel zueinander angeordnet,
die sich zwischen den Laufschienen 82, 83 erstrecken,
die an dem Tischrahmen 1 angeordnet sind. Die Spannriegel 76a, 76b, 77a, 77b sind mittels Drehachsen 84 mit
den Gelenkscheiben 73a, 73b, 74a, 74b verbunden. Die
Endabschnitte 78a, 78b, 79a, 79b, 80a, 80b, 81a, 81b der
Spannriegel 76a, 76b, 77a, 77b umgreifen die Endabschnitte 85, 86 der Laufschienen 82, 83 und sind durch Betätigung des Bedienungshebels 31a an die Laufschienen 82,
83 preßbar, so daß eine Arretierung des Werkzeugschlittens 7 erfolgt. Zur Erhöhung der Preßwirkung kann jeweils
einer der Endabschnitte 78a, 78b, 81a, 81b der Spannriegel 76a, 76b, 77a, 77b zangenartig ausgebildet sein und
einen zugeordneten Abschnitt 85, 86 der Laufschiene 82,
83 umgreifen. Um einen Reibschluß auf der gesamten Breite
des Werkzeugschlittens 7 zu erzielen, sind die Endabschnitte 78a, 78b, 79a, 79b, 80a, 80b, 81a, 81b der Spannriegel
76a, 76b, 77a, 77b als parallel zu den Laufschienen 82,
83 angeordnete Preßbalken 78, 79, 80, 81 ausgebildet.
Zur Arretierung kann auch ein Klemmhebel 63 wie zu der
Klemmeinrichtung 55 beschrieben verwandt werden.

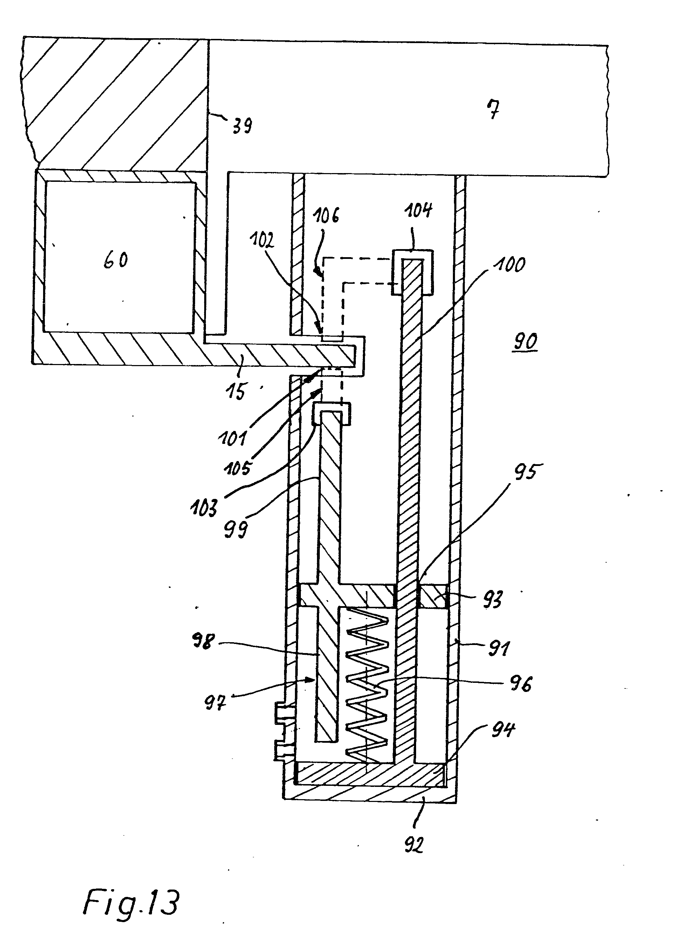

Eine weitere Ausbildung einer Klemmeinrichtung ist in Fig. 13 dargestellt und mit 90 bezeichnet. Diese Klemmeinrichtung 90 weist hydraulische oder pneumatische Klemmittel auf, die den Werkzeugschlitten 7 an der stegartigen Laufschiene 15 arretieren können. An der Unterseite des Werkzeugschlittens 7 ist mindestens ein Zylinder 91 angeordnet, in dem zwei relativ zueinander verschiebliche Kolbenplatten 93, 94 gelagert sind, die mittels einer Zugfeder 96 voneinander distanziert sind. Die obere Kolbenplatte 93 weist einen Anschlag 98 auf, der den Abstand zur unteren Kolbenplatte 94 begrenzt. An der anderen Seite der Kolbenplatte 93 befindet sich ein Andrückstempel 99, dessen Stempelkopf 101 bei Druckbeaufschlagung der Kolbenplatte 93 an die Unterseite der Laufschiene 15 gepreßt wird. An der anderen Kolbenplatte 94 ist ein Aufdrückstempel 100 ausgebildet, der durch eine Durchbrechung 95 in der Kolbenplatte 93 geführt und dessen gekröpfter Stempelkopf 102 auf die Oberseite der Laufschiene 15 preßbar ist.

Zur Verriegelung des Werkzeugschlittens 7 wird ein hydraulisches oder pneumatisches Druckmittel in die Druckkammer 97 eingeführt,wodurch die Kolbenplatte 94 nach unten und die Kolbenplatte 93 nach oben gelegt wird und die Verriegelung durch Anlage der Stempelköpfe 101, 102 an der Laufschiene 15 erfolgt. Zum Lösen der Verriegelung wird die Druckbeaufschlagung der Druckkammer 97 beendet, wodurch die Zugfeder 96 die Kolbenplatte 93 und die Kolbenplatte 94 zueinander bewegt und die Stempelköpfe 101, 102 von ihrer
Anlage an die Laufschiene 15 gelöst werden. Endanschläge
103, 104 verhindern, daß sich z.B. nur der untere Stempelkopf 101 von der Laufschiene 15 löst und daß die Stempelköpfe 101, 102 sich derart von der Laufschiene 15 entfernen, daß bei einer Druckbeaufschlagung eine Anlage auf
der Laufschiene 15 nicht mehr möglich ist. Es ist auch
möglich, im Bereich einer Laufschiene 15 zwei Zylinder 91
anzuordnen und die beiden Stempelköpfe 101, 102 der Andrückstempel 99 und Aufdrückstempel 100 mit jeweils einem
Preßbalken 105, 106 zu verbinden. Diese Preßbalken sind
dann flächig an die Laufschiene 15 od. dgl. preßbar. Um
einen gleichmäßigen Anpreßdruck der Preßbalken zu erzielen, ist es erforderlich, beide Zylinder 91 gleichmäßig
mit hydraulischem oder pneumatischem Druckmittel zu versorgen.
Es ist auch möglich, in diesem Fall zwei hintere hydraulische
oder pneumatische Zylinder 91 und zwei vordere hydraulische
oder pneumatische Zylinder 91 zu einer Funktionseinheit auszubilden, um einen gleichmäßigen Anpreßdruck der Preßbalken
auf beiden Laufschienen 15 des Tischrahmens 1 zu erzielen.

Zur einwandfreien Einstellung des Bearbeitungswerkzeuges
auf dem Arbeitstisch 10 ist ein Maßjustier- und Anzeigegerät 9 vorgesehen (Fig. 14). Dieses ist im Bereich
einer Laufschiene 15 angeordnet. Das Maßjustier- und
Anzeigegerät 9 ist mit einem Maßband 36 in Wirkverbindung bringbar, das in einer Maßbandführung 37 verschieblich gelagert ist. Die Maßbandführung 37 befindet sich
oberhalb des mit der Laufschiene 15 verbundenen horizontalen Rahmenprofils 60 des Tischrahmens 1. Das in der
Maßbandführung 37 gelagerte Maßband 36 kann mit dem Maßbandzug 38 des Anschlages 11 verbunden werden, wodurch
eine maßhaltige Lagefixierung des Arbeitswerkzeuges zum
Anschlag möglich ist. Der Anschlag 11 ist in den Fig. 15,
16 dargestellt.

Das Maßjustier- und Anzeigegerät (9) weist eine
Maßeinstelleiste 40 auf, die mittels einer Bolzenverbindung 41 od. dgl. mit dem Werkzeugschlitten 7 verbunden
ist. Wie in Fig. 14 dargestellt, besteht die Bolzenverbindung 41 aus einem Bolzen 41a, der durch die Durchbrechungen von Haltestegen 41c schiebbar ist, die auf der Maßeinstelleiste 40 angeordnet sind. Zur Lagesicherung des
Bolzens 41a ist ein Sicherungsring 41b vorgesehen. Auf der
mit dem Werkzeugschlitten 7 verbundenen Maßeinstelleiste
40 ist eine Markierungsbuchse 42 mit einer Feststelleinrichtung 43 verschieblich gelagert. Die Markierungsbuchse
42 weist zwei im Abstand voneinander befindliche vertikale
Führungsstege 44, 45 auf, die als Fassung für auswechselbare Maßfenster 46 dienen. Diese Maßfenster 46, die vorzugsweise aus einem transparenten Werkstoff hergestellt
sind, weisen vertikale Markierungen 46a auf, mittels
derer beispielsweise die Schnittbreite des vorgesehenen
Holzbearbeitungswerkzeuges gekennzeichnet ist. Die Feststelleinrichtung 43 besteht aus einer Gewindeschraube 47,

die in ein Gewinde der Markierungsbuchse 42 einschraubbar
ist. An dem Endabschnitt der Gewindeschraube 47 befindet
sich eine mit Gummi beschichtete Druckplatte 48, die auf
die Maßeinstelleiste 40 gepreßt werden kann.

Wie in Fig. 17 dargestellt, ist oberhalb der Maßbandführung
37 eine Tischeinsatznut 50 ausgebildet, in der ein Z-förmiges Halteprofil 51 verschieblich gelagert ist. Auf diesem
Halteprofil 51 ist ein Tischeinsatz 52 befestigt, der an
dem der Tischeinsatznut 50 gegenüberliegenden Abschnitt
der Ausnehmung 5 in einer Tischplatte 39 durch eine Tischeinsatzfeder 53 gehalten ist. Die Tischeinsatzfeder 53
ist in einer Haltenut 54 der Tischplatte 39 verschieblich
gelagert.

# 0026919

GLAWE, DELFS, MOLL & PARTNER

PATENTANWÄLTE
ZUGELASSENE VERTRETER BEIM EUROPÄISCHEN PATENTAMT

RICHARD GLAWE
DR.-ING.

KLAUS DELFS
DIPL.-ING

ULRICH MENGDEHL
DIPL.-CHEM. DR. RER. NAT.

WALTER MOLL
DIPL.-PHYS. DR. RER. NAT.
ÖFF. BEST. DOLMETSCHER

HEINRICH NIEBUHR
DIPL.-PHYS. DR. PHIL. HABIL.

8000 MÜNCHEN 26
POSTFACH 37
LIEBHERRSTR. 20
TEL. (089) 22 65 48
TELEX 52 25 05 SPEZ

2000 HAMBURG 13
POSTFACH 25 70
ROTHENBAUM-
CHAUSSEE 58
TEL. (040) 4 10 20 08
TELEX 21 29 21 SPEZ

HAMBURG

Volker Tietjen

Lüneburg

----------------------------

Arbeitstisch mit Maschinenschlitten

----------------------------

p 9776/80 EU

## P a t e n t a n s p r ü c h e

1.  Arbeitstisch mit Maschinenschlitten zur Halterung von Holzbearbeitungswerkzeugen mit einem Anschlag für das zu bearbeitende Werkstück gekennzeichnet durch einen skelettartigen Tischrahmen (1), in dessen werkstückauflageseitigem Rahmenabschnitt (2) eine sich zwischen den Seitenflächen (3, 4) des Tischrahmens (1) erstreckende Ausnehmung (5) mit einer Schlittenführung (6) für einen Werkzeugschlitten (7), der mittels einer Klemmeinrichtung (8, 55, 70, 90) feststellbar ist, einem Maßjustier- und Anzeigegerät (9) und einem verstellbaren Werkstückanschlag (11) ausgebildet ist.

ZUGELASSENER VERTRETER BEIM EUROPÄISCHEN PATENTAMT · ADMITTED REPRESENTATIVE BEFORE THE EPO

KONTEN: DRESDNER BANK AG. HAMBURG. KTO.-NR. 4933145 (BLZ 200 800 00) · POSTSCHECK: HAMB. 216723-207 (BLZ 200 100 20)

0026919

2. Arbeitstisch nach Anspruch 1, dadurch gekennzeichnet, daß der Werkzeugschlitten (7) aus Traversen (12) gebildet ist, deren jeweils einer Endabschnitt (13) auf einer an dem Tischrahmen (1) angeordneten stegartigen Laufschiene (15) und deren jeweils anderer Endabschnitt (14) auf einer als L-förmiges Winkelprofil an dem Tischrahmen (1) angeordneten Laufschiene (16) abgestützt verschieblich gelagert ist.

3. Arbeitstisch nach Anspruch 2, dadurch gekennzeichnet, daß an dem einen Endabschnitt (13) der Traversen (12) ein vertikaler Steg (17a) mit horizontalen Zapfen (18) ausgebildet ist, auf denen auf der Laufschiene (15) abrollbare Rollenlager (19) befestigt sind.

4. Arbeitstisch nach Anspruch 2 und 3, dadurch gekennzeichnet, daß an dem anderen Endabschnitt (14) der Traversen (12) ein horizontaler Steg (17b) mit vertikalen Zapfen (20) ausgebildet ist, auf denen an dem vertikalen langen Schenkel (16a) der als L-förmiges Winkelprofil ausgebildeten Laufschiene (16) sich abstützende Rollenlager (21) angeordnet sind.

5. Arbeitstisch nach Anspruch 1, dadurch gekennzeichnet, daß die Klemmeinrichtung (8) zwei Klemmstücke (22,23) aufweist, von denen das eine Klemmstück (22) an zwei oberen Klemmgelenken (24) und das andere Klemmstück (23) an zwei unteren Klemmgelenken (25) befestigt ist, deren
einer Endabschnitt (26, 27) jeweils an den Klemmhalterungen (28) drehbar gelagert und deren anderer Endabschnitt (29, 30) jeweils mittels zweier hebelartiger
Feststellgelenke (31) verbunden ist, durch deren
Schwenkbetätigung das obere und untere Klemmgelenk
(24, 25) um die an der Klemmhalterung (28) befindlichen Drehachsen (34,35 ) schwenkbar und die Klemmstük-
ke (22, 23) hierdurch auf die stegartige Laufschiene
(15) preßbar sind.


6.  Arbeitstisch nach Anspruch 1, dadurch gekennzeichnet,
    daß die Klemmeinrichtung (55) Exzenterstücke (56) aufweist, die auf einer Drehachse (57) in an der Unterseite des Werkzeugschlittens (7) befestigten Exzenterhaltern (62) gelagert und an Anschlägen (61) von Führungsplatten (66, 67) preßbar sind, auf denen der
    Werkzeugschlitten (7) verschieblich ist.


7.  Arbeitstisch nach Anspruch 6, dadurch gekennzeichnet,
    daß die Exzenterstücke (56) der einen Drehachse (57)
    mit den Exzenterstücken (56) der anderen Drehachse
    (57) mittels Übertragungsstangen (59) verbunden sind
    und daß die eine Drehachse (57) mit Bedienungshebeln
    (31a) verbunden ist.

0026919

8.  Arbeitstisch nach Anspruch 6 und 7, dadurch gekennzeichnet, daß an jedem Bedienungshebel (31a) ein Klemmhebel (63) ausgebildet ist, der zur Arretierung des Bedienungshebels (31a) an einer am Tischrahmen (1) angeordneten Schiene (64) festklemmbar ist.

9.  Arbeitstisch nach Anspruch 1, dadurch gekennzeichnet, daß die Klemmeinrichtung (70) aus vier an die Laufschienen (82, 83) des Tischrahmens (1) anpreßbaren Spannriegeln (76a, 76b, 77a, 77b) besteht, die parallel zueinander angeordnet und in Gelenkscheiben (73a, 73b, 74a, 74b) gelagert sind, die in an der Unterseite des Werkzeugschlittens (7) angeordneten Haltern (71a, 71b, 72a, 72b) drehbar gelagert und mittels eines Bedienungshebels (31a) betätigbar sind.

10. Arbeitstisch nach Anspruch 9, dadurch gekennzeichnet, daß die Endabschnitte (78a, 78b, 79a, 79b, 80a, 80b, 81a, 81b) der Spannriegel (76a, 76b, 77a, 77b) zangenförmig ausgebildet und an abgekröpften Abschnitten (85, 86) der Laufschiene (82, 83) zur Anlage bringbar sind.

11. Arbeitstisch nach Anspruch 1, dadurch gekennzeichnet, daß die Klemmeinrichtung (90) aus mehreren an der Unterseite des Werkzeugschlittens (7) angeordneten hydraulischen oder pneumatischen Zylindern (91) besteht, in dem zwei relativ zueinander verschiebliche Kolbenplatten (93, 94) mit einem Andruckstempel (99) und einem Aufdruckstempel (100) angeordnet sind, deren Stempelköpfe (101, 102)
an eine Laufschiene (15) od. dgl. preßbar sind.

12. Arbeitstisch nach Anspruch 11, dadurch gekennzeichnet,
daß in der durch die Kolbenplatten (93, 94) gebildeten
Druckkammer (97) eine mit den Kolbenplatten (93, 94)
verbundene Zugfeder (96) angeordnet ist.

13. Arbeitstisch nach Anspruch 1, dadurch gekennzeichnet,
daß das Maßjustier- und Anzeigegerät (9) mit
einem Maßband (36) in Wirkverbindung bringbar ist,
das in einer Maßbandführung (37) verschieblich gelagert und mit dem Maßbandzug (38) des Anschlages (11)
verbindbar ist, die in der Ausnehmung (5) des Tischrahmens (1) des Arbeitstisches (10) angeordnet ist.

14. Arbeitstisch nach Anspruch 1 bis 13, dadurch gekennzeichnet, daß das Maßjustier- und Anzeigegerät
(9) eine Maßeinstelleiste (40) aufweist, die mittels
einer Bolzenverbindung (41) od. dgl. mit dem Werkzeugschlitten (7) verbunden ist und auf der eine Markierungsbuchse (42) mit einer Feststelleinrichtung
(43) verschieblich gelagert ist.

15. Arbeitstisch nach Anspruch 1 bis 14, dadurch gekennzeichnet, daß auf der Markierungsbuchse (42) im Abstand voneinander zwei vertikale Führungsstege (44,

0026919

45) angeordnet sind, die als Fassung für auswechselbare Maßfenster (46) ausgebildet sind.

16. Arbeitstisch nach Anspruch 1 bis 15, dadurch gekennzeichnet, daß oberhalb der Maßbandführung (37) eine
Tischeinsatznut (50) ausgebildet ist, in der ein
Z-förmiges Halteprofil (51) verschieblich gelagert
ist, auf dem ein Tischeinsatz (52) befestigt ist,
der an dem der Tischeinsatznut (50) gegenüberliegenden Abschnitt der Ausnehmung (5) in einer Tischplatte
(39) durch eine Tischeinsatzfeder (53) gehalten ist,
die in einer Haltenut (54) der Tischplatte (39)
verschieblich gelagert ist.

Fig.1

0026919

1/4

M
N
39
64
10
1
1
60
39

Fig.2

2
39
64
10
1

Fig.3

2
10 →
3 →
5
6
B
A
1
4

Fig.4

0026919/14

Fig.5

Fig. 6

Fig. 7

C-D

Fig.8

E-F

G-H

12

60

18

17a

39

19

17a

22

22

35

15

15

24

24

23

28

34

8

25

8

28

Fig.9a

Fig.9b

7/14

0026919

Fig.11a

0026919

64

Fig.11b

63b

63a

65

31a

63

Fig.11c

37

42

49

46

40

## Fig.12

70

002 6919

14/10

Fig.13

M-N

37

50

2

39

1

60

15

Fig.10

Schnitt I-J

41

45

42

48

40

47

46    46a

44

45

I

42

J

43

9

41b

41c

41a

40

41

Fig.14

Fig.15

A

B

Fig.16

Fig.17